# EUROPÄISCHE PATENTSCHRIFT

(11) **EP 0 855 095 B1**
(45) Veröffentlichungstag und Bekanntmachung des Hinweises auf die Patenterteilung: **30.01.2002**
(21) Anmeldenummer: 96945488.3
(22) Anmeldetag: 10.10.1996
(51) Int. Cl.: H01S 3/036

(54) **LASERANORDNUNG, VORZUGSWEISE HOCHLEISTUNGS-GASLASERANORDNUNG**
LASER DEVICE, PREFERABLY HIGH-ENERGY GAS LASER DEVICE
DISPOSITIF LASER, DE PREFERENCE DISPOSITIF LASER A GAZ A HAUTE ENERGIE

(30) Priorität: 10.10.1995 DE 19537673
(43) Veröffentlichungstag der Anmeldung: 29.07.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: NIEHOFF, Jörg, D-52066 Aachen (DE); JAROSCH, Uwe, D-52134 Kohlscheid (DE)
(74) Vertreter: Jackisch-Kohl, Anna-Katharina
(86) Internationale Anmeldenummer: DE9601930
(87) Internationale Veröffentlichungsnummer: WO9714199

(56) Entgegenhaltungen:
- EP-A- 0 111 045
- EP-A- 0 527 338

## Beschreibung

Die Erfindung betrifft eine Laseranordnung, vorzugsweise eine Hochleistungs-Gaslaseranordnung, nach dem Oberbegriff des Anspruches 1.

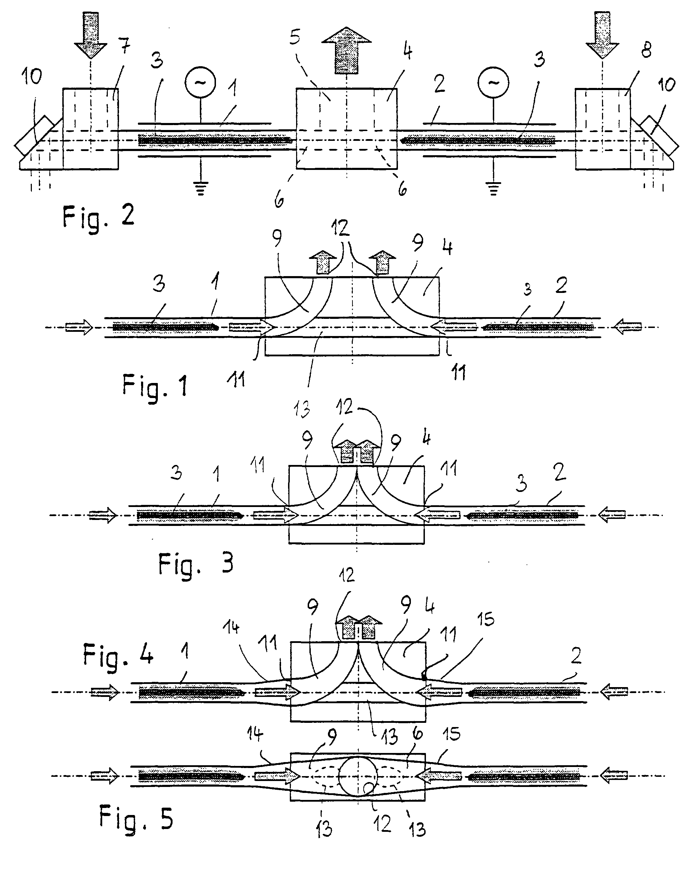

Hochleistungs-Gaslaser mit schneller axialer Strömung arbeiten mit einer Gasumwälzung in einem geschlossenen Strömungssystem. Die Gasumwälzung dient der konvektiven Abfuhr der Verlustwärme aus den Anregungsstrecken. Wie Fig. 2 zeigt, wird üblicherweise die Strömungsführung so gestaltet, daß in je zwei paarweise zusammengehörende Anregungsstrecken das Gas einströmt. Die Einzelströmungen eines solchen Streckenpaares strömen auf einer Achse in Richtung zueinander und werden an einer Stelle zusammengeführt. Über eine zur Achse des Streckenpaares in der Regel senkrechte Abströmung gelangt die Gasströmung in das nachfolgende Element des Strömungssystems. Die gebräuchliche Form ist die Zusammenführung der Einzelströmungen innerhalb von Laserstrahlen als unstetige Einmündung des Anregungsrohrquerschnittes auf den Querschnitt des nachfolgenden Elementes in Form eines T-Stückes.

Bei der Gestaltung des Strömungssystems ist die Beeinflussung der Wechselwirkungen zwischen Strömung und Anregung von großer Bedeutung. Experimentelle Untersuchungen zeigen einen starken Einfluß der Strömung auf die Strahlqualität und Ausgangsleistung aufgrund von statistischen Phasenstörungen des aktiven Mediums. Im Bereich der Ausströmung aus den Anregungsstrecken und Strömungszusammenführung ist dafür folgender Mechanismus wesentlich: Die gebräuchlichen unstetigen Übergänge führen zu Strömungsablösungen. Gleichzeitig ist die Vermischung der beiden Teilströme des durch die Anregung erhitzten und beschleunigten Gases, im Extremfall bis zu 500°K und 700 m/s, durch den frontalen Aufprall mit einem großen Impulsaustausch verbunden. Es kommt zu Druckstößen, die auf die Leistungseinkoppelung in den Anregungsstrecken zurückwirken, da es sich um eine Unterschallströmung handelt. Dies führt zu reduzierten maximalen Leistungsdichten in der Entladung. Zum anderen werden über dem gesamten Strömungsquerschnitt der Anregungsrohre statistische Phasenstörungen (Dichtefluktuationen) des optischen Mediums beobachtet, die insbesondere bei instabilen und weniger ausgeprägt auch bei stabilen Resonatoren zu reduzierten Strahlqualitäten und Schwankungen in der Laserleistung führen.

Ein zweiter wichtiger Gesichtspunkt bei der Gestaltung des Strömungssystems ist die Minimierung der Druckverluste. Hohe Laserleistungen sind an einen der Leistung proportionalen Massenstrom gebunden. Die zur Gasumwälzung eingesetzten Strömungsmaschinen, insbesondere Turboradialverdichter, besitzen eine stark von den Strömungswiderständen abhängige Kennlinie. Die für hohe Laserleistungen notwendigen Massenströme lassen sich nur mit hinsichtlich der Strömungswiderstände optimierten Gaskreisläufen realisieren. Neben den Anregungsstrecken sind die Ausströmungen aus den Anregungsstrecken die Orte des größten Druckverlustes im System, da sich dort aufgrund der hohen Gasgeschwindigkeiten ein hoher Staudruck ergibt. Die gebräuchliche Ausführung als T-Stück führt infolge der scharfkantigen Umlenkung und der Querschnittsflächenänderungen am Übergang von den Anregungsrohren zum Ausströmrohr zu starken Strömungsablösungen. Gleichzeitig ist die Vermischung der beiden Teilströme durch den frontalen Aufprall mit einem großen Impulsaustausch verbunden, so daß an dieser Stelle bis zu 50 % aller im System auftretenden Druckverluste anfallen. Der hohe Druckverlust dieser Anordnung begrenzt den mit den Verdichtern realisierbaren Volumenstrom und damit indirekt über die konvektiv abführbare Kühlleistung die erzielbare Laserleistung.

Auch bei der gattungsgemäßen Laseranordnung (EP 0 111 045 A2) treffen die beiden Teilströmungen des Lasermediums frontal aufeinander. Der frontale Aufprall findet in einem Einlaufbereich zu einem Radialverdichter statt, über den die beiden Teilströmungen wieder den Anregungsbereichen zugeführt werden.

Bei einer anderen bekannten Laseranordnung (EP 0 130 346 B1) treffen die beiden entgegengesetzt zueinander gerichteten Teilströmungen des Lasermediums auf eine Zwischenwand, die innerhalb eines Verbindungskopfes der das Lasermedium führenden Entladungsrohre vorgesehen ist. Nach dem Aufprall auf die Zwischenwand gelangen die Teilströmungen zu einer Auslaßöffnung, über die sie einer Einheit zum Kühlen und Transportieren des Lasermediums zugeführt werden.

Der Erfindung liegt die Aufgabe zugrunde, die gattungsgemäße Laseranordnung so auszubilden, daß sie eine hohe Laserleistung bei hoher Strahlqualität aufweist.

Diese Aufgabe wird bei der gattungsgemäßen Laseranordnung erfindungsgemäß mit den kennzeichnenden Merkmalen des Anspruches 1 gelöst.

Bei der erfindungsgemäßen Laseranordnung werden die in Richtung zueinander strömenden Teilströme des Lasermediums zum größten Teil durch die Wände aus dem Laserstrahlweg geführt. Dadurch wird ein frontaler Aufprall der in Richtung zueinander gerichteten Teilströmungen des Lasermediums vermieden. Dadurch werden Strömungsablösungen und die Druckstöße zwischen den Teilströmungen reduziert. Dadurch werden auch die maximalen möglichen Leistungsdichten in der Anregung erhöht und die statistischen Störungen der optischen Phase deutlich reduziert. Eine Erhöhung der Laserleistung mit gleichzeitig verbesserten Strahleigenschaften ist die Folge. Gleichzeitig wird infolge der erfindungsgemäße Ausbildung die mögliche Laserleistung durch Verringerung der Druckverluste bzw. durch Erhöhung des Massenstroms zur konvektiven Kühlung des aktiven Mediums erhöht. Bei einer vorgegebenen Leistung wird das Bauvolumen einer Hochleistungsstrahlquelle verringert. Wegen der geringeren Verluste im Resonator und des geringeren Leistungsbedarfs für die Gasumwälzung wird der Gesamtwirkungsgrad der Strahlquelle erhöht. Die die Teilströmungen führenden Wände weisen für den Laserstrahl den Strahldurchtritt mit axialer Ausdehnung und feststehender, den Laserstrahl umschließender Innenkontur auf.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung eine erfindungsgemäße Laseranordnung,
- Fig. 2: eine bekannte Laseranordnung,
- Fig. 3: in einer Darstellung entsprechend Fig. 1 eine zweite Ausführungsform einer erfindungsgemäßen Laseranordnung,
- Fig. 4: in Seitenansicht eine weitere Ausführungsform einer erfindungsgemäßen Laseranordnung,
- Fig. 5: eine Draufsicht auf die Laseranordnung gemäß Fig. 4,
- Fig. 6: eine weitere Ausführungsform einer erfindungsgemäßen Laseranordnung,
- Fig. 7: in einer Ansicht in Richtung des Pfeiles VII in Fig. 6 eine Seitenansicht eines Anschlußstückes der Laseranordnung nach Fig. 6,
- Fig. 8 und Fig. 9: in Darstellungen entsprechend den Fig. 6 und 7 eine weitere Ausführungsform einer erfindungsgemäßen Laseranordnung,
- Fig. 10: in einer Darstellung entsprechend Fig. 7 eine weitere Ausführungsform eines Anschlußstückes einer erfindungsgemäßen Laseranordnung,
- Fig. 11 und Fig. 12: in Darstellungen entsprechend den Fig. 6 und 7 eine weitere Ausführungsform einer erfindungsgemäßen Laseranordnung,
- Fig. 13 bis Fig. 18: weitere Ausführungsformen von Anschlußstücken von erfindungsgemäßen Laseranordnungen.

Fig. 2 zeigt eine herkömmliche Laseranordnung mit zwei fluchtend zueinander liegenden Anregungsstrecken 1 und 2 (Anregungsrohre), die im dargestellten Ausführungsbeispiel kreisförmigen Querschnitt haben.

Beide Anregungsstrecken 1, 2 haben über ihre Länge konstanten Querschnitt und werden vom Lasermedium 3 in bekannter Weise axial schnell durchströmt. Die Anregungsstrecken 1, 2 schließen an ein Anschlußstück 4 an, in dem die beiden in Richtung zueinander strömenden Lasermedien zusammentreffen und rechtwinklig in einen Auslaßkanal 5 umgelenkt werden. Das Anschlußstück 4 ist vorteilhaft massiv ausgebildet und weist Kanäle 5 und 6 auf, welche den Auslaßkanal 5 sowie die beiden fluchtend zueinander liegenden Zuströmkanäle 6 bilden. Innerhalb des Anschlußstückes 4 werden die beiden Lasermediumströme jeweils um 90° in den Auslaßkanal 5 umgelenkt. Die beiden miteinander vereinigten Lasermediumströme gelangen im Anschluß an das Anschlußstück 4 in eine Rückführung, mit der sie wieder verdichtet in zwei Teilströme aufgeteilt und in Richtung der Pfeile über entsprechende Umlenkeinrichtungen 7 und 8 den Anregungsstrecken 1, 2 zugeführt werden. Die Zuströmkanäle 6 haben üblicherweise kleineren Strömungsquerschnitt als der Auslaßkanal 5. Die beiden Teilströme des Lasermediums 3 werden innerhalb des Anschlußstückes 4 zusammengeführt, wobei diese Zusammenführung innerhalb des Strahlweges des Lasermediums erfolgt. Der Weg des Laserstrahles wird durch Resonatorspiegel oder Umlenkspiegel 10 an den einströmseitigen Enden der Anregungsstrecken 1, 2 festgelegt.

Bei der Laseranordnung nach Fig. 1 werden die beiden Teilströme 3 des Lasermediums innerhalb des Anschlußstückes 4 nicht miteinander vereint, sondern in getrennten Kanälen 9 geführt. Das Eintrittsende 11 sowie das Austrittsende 12 der Kanäle 9 liegen um 90° versetzt zueinander. Im Bereich zwischen Eintritts- und Austrittsende verlaufen die Kanäle 9 stetig gekrümmt. Vorteilhaft haben die Kanäle 9 über ihre Länge konstanten Querschnitt, der vorteilhaft gleich groß ist wie der Querschnitt der Anregungsstrecken 1, 2. Die beiden Teilströme des Lasermediums 3 werden in getrennten Kreisläufen geführt, so daß eine Vermischung der Teilströme nicht stattfindet. Dadurch wird eine Rückwirkung, die durch eine Mischung der Teilströme entsteht, und eine dabei mögliche Übertragung von strömungstechnischen Störungen auf die Anregungsbereiche des Lasermediums zuverlässig vermieden, zumindest aber verringert.

Es ist auch möglich, die innerhalb des Anschlußstückes 4 voneinander getrennt geführten Teilströme des Lasermediums 3 erst nach dem Durchströmen von Strömungskomponenten zu vermischen. Eine solche Vermischung findet dann in Strömungsrichtung hinter dem Anschlußstück 4 an solchen Stellen statt, von denen aus eine Rückwirkung der Strömung auf die Anregungsbereiche in den Anregungsstrecken 1, 2 nicht erfolgt. Derartige Strömungskomponenten sind zum Beispiel Wärmetauscher oder Pumpen, in denen Verwirbelungen, Beschleunigungen und Verzögerungen sowie andere bedämpfende Führungen wirken.

Die beiden Umlenkkanäle 9 sind durch einen geraden, im Anschlußstück 4 vorgesehenen Kanal 13 miteinander verbunden. Seine Achse liegt fluchtend zu den Achsen der Anregungsstrecken 1, 2. Dieser Kanal 13 umschließt den Strahlweg. Da die Teilströme im Anschlußstück 4 voneinander getrennt sind, prallen die in den Anregungsstrekken 1, 2 in Richtung zueinander strömenden Teilströme nicht aufeinander, so daß strömungsmechanische Verluste und optische Störungen zuverlässig vermieden werden. Die in den Kanal 13 strömenden Anteile der Teilströmungen des Lasermediums 3 sind gering und haben keine nachteiligen Auswirkungen.

Fig. 3 zeigt eine Ausführungsform, bei der die beiden Teilströme des Lasermediums 3 im Anschlußstück 4 wiederum durch die teilkreisförmig gekrümmten Kanäle 9 strömen. Im Gegensatz zum Ausführungsbeispiel nach Fig. 1 werden die beiden Teilströme nach dem Austritt aus dem Austrittsende 12 der Kanäle 9 zusammengeführt. Das Lasermedium wird vom Eintrittsende 11 bis zum Austrittsende 12 über einen Winkelbereich von 90° kontinuierlich umgelenkt. Beim Austritt aus dem Austrittsende 12 sind die beiden Teilströme zumindest annähernd parallel gerichtet, so daß eine störungsfreie Vermischung ermöglicht wird. Die Kanäle 9 sind wiederum bogenförmig ausgebildet und haben über ihre Länge vorteilhaft konstanten Querschnitt, welcher ebenfalls vorteilhaft dem Querschnitt der Anregungsstrecken 1, 2 entspricht.

Die bogenförmigen Kanäle 9 im Anschlußstück 4 liegen in einer gemeinsamen Ebene. Dadurch können die Kanäle in beliebiger Ausrichtung vorgesehen werden, so daß identische oder bewußt unterschiedliche Abströmrichtungen für die umgelenkten Teilströmungen erreicht werden können. Außerdem kann der notwendige Bauraum nach nur einer Seite des Strahlweges gelegt werden.

Zur Umlenkung einer Strömung wird eine Kraft benötigt. Sie wird in Laserstrahlquellen in bekannter Weise durch die entgegenkommende Strömung aufgebracht, die mit näherungsweise gleicher Dichte und Geschwindigkeit umgelenkt wird. Zeitliche Schwankungen von Dichte und/oder Geschwindigkeit der beiden Teilströmungen zueinander bewirken die beschriebenen Störungen. Daher ist es vorteilhaft, wenn zumindest Teile der zur Umlenkung benötigten Kraft nicht durch die jeweils entgegengerichtete und schwankungsbehaftete Teilströmung, sondern durch eine feste, führende Wand aufgebracht werden. Dies ist umso besser möglich, je größer die durch die Strömungsumlenkung kraftbeaufschlagte Fläche im Vergleich zur Querschnittsfläche des Strahlweges bzw. der Querschnittsfläche der entgegenkommenden Teilströmung ist. Ein entsprechendes Ausführungsbeispiel zeigen die Fig. 4 und 5. Die in Strahlrichtung projizierte Fläche, durch welche die Teilströmungen aus dem Bereich des Strahlweges geführt werden, ist in diesem Falle größer als die Querschnittsfläche des Strahlweges. Die Anregungsstrecken 1, 2 nehmen im Querschnitt vor dem Eintrittsende 11 des Anschlußstückes 4 zu. Vorzugsweise erfolgt diese Zunahme stetig, so daß die Anregungsstrecken 1, 2 im Bereich vor dem Eintrittsende 11 jeweils ein in Strömungsrichtung (vgl. eingezeichnete Strömungspfeile in den Fig. 4 und 5) sich trichterförmig erweiterndes Rohrstück 14, 15 aufweisen. Die vergrößerte, vom Lasermedium durchströmte Querschnittsfläche bleibt im Bereich der Kanäle 9, also im Bereich der Umlenkung, beibehalten. Es ist auch möglich, die Querschnittsfläche der Kanäle 9 des Anschlußstückes 4 in Strömungsrichtung noch weiter zu vergrößern. Wie beim Ausführungsbeispiel nach Fig. 3 sind die beiden bogenförmigen Kanäle 9 am Austrittsende 12 des Anschlußstückes 4 vereint, so daß in diesem Bereich eine Vermischung der Teilströme erfolgt. Wie Fig. 5 zeigt, kann der Austrittsbereich kreisförmigen Querschnitt haben. Auch bei der Ausführungsform nach Fig. 3 ist ein solcher kreisförmiger Querschnitt vorgesehen. Die beiden Teilströme, die in Fig. 4 durch zwei Strömungspfeile gekennzeichnet sind, sind im Austrittsbereich parallel zueinander gerichtet.

Der Kanal 13 für den Strahldurchtritt verläuft wiederum gerade und fluchtend zur Achse der beiden Anregungsstrecken 1, 2. Wie bei den Ausführungsbeispielen nach den Fig. 1 und 3 mündet der Kanal 13 innerhalb des Anschlußstückes 4 in die beiden Umlenkkanäle 9. Infolge des gekrümmten Verlaufs der Umlenkkanäle 9 ist die Mündung des Kanals 13 in die Umlenkkanäle 9 oval ausgebildet (Fig. 5). Der Kanal 13 für den Durchtritt des Laserstrahls hat vorteilhaft den gleichen Querschnitt wie die Anregungsstrecken im Bereich der Energieeinkoppelung 1, 2 bzw. wie der Laserstrahl. Der Querschnitt der Entladungsrohre/Laserstrahl ist kleiner ist als der Querschnitt der Rohrstücke 14, 15 im Bereich der Eintrittsenden 11.

Vorteilhaft werden die Durchströmquerschnitte der Teilströmungen im Bereich der Rohrstücke 14, 15, d.h. vor der Umlenkung in den Kanälen 9, näherungsweise senkrecht zum Weg des Laserstrahls im Kanal 13 aufgeweitet. Vorteilhaft wird dadurch zum einen die Geschwindigkeit der Teilströmungen des Lasermediums vor der Umlenkung 9 reduziert; zum anderen wird die Strömung auf eine über den Querschnitt des Strahlweges (Kanal 13) hinaus reichende Fläche erweitert.

Bei Umlenkungen der Teilströmungen in einer Ebene in näherungsweise rohrförmigen Geometrien ist es vorteilhaft, den Querschnitt der Strömungskanäle senkrecht zur Umlenkebene zu strecken. Dadurch wird die führende Fläche im Verhältnis zum Querschnitt des Laserstrahlweges vergrößert und die Abstützung der Umlenkung gegen eine feste Wand verbessert. Außerdem wird eine Anpassung des strömungsführenden Querschnittes an die Form des Einströmquerschnittes bei geeigneten Formen des Ausströmquerschnittes erreicht. So kann der Strömungsquerschnitt der Umlenkkanäle 9 so in seiner Form verändert werden, daß die Abmessungen der Strömungsquerschnitte senkrecht zur Ebene der Zu- und Abströmung größer sind als in dieser Ebene. Hierbei können die Querschnittsflächen der Teilströmung entlang der Führung und der Umlenkung in die Querschnittsfläche der Abströmung stetig in Querschnittsfläche und Querschnittsform transformiert werden. So kann beispielsweise die Querschnittsfläche der Umlenkkanäle 9 vom Eintrittsende 11 bis zum Austrittsende 12 bei sämtlichen zuvor beschriebenen Ausführungsformen in der Größe und in der Querschnittsform stetig verändert werden. Dadurch werden Strömungsverluste minimiert und der Massendurchsatz bei gleicher Antriebsleistung des Strömungskreislaufes erhöht. Außerdem können dadurch die Teilströmungen einer Aufweitung der Strömungsquerschnitte besser folgen. Die Geschwindigkeiten der Teilströmungen des Lasermediums entlang der Führung werden gesenkt und Störungen im Bereich der Führung durch Ablösungen und andere instationäre Erscheinungen werden verringert. So kann beispielsweise der jeweilige Umlenkkanal 9 am Eintrittsende 11 einen kreisförmigen Querschnitt haben, der in der beschriebenen Weise kontinuierlich so verändert wird, daß die Umlenkkanäle 9 am Austrittsende 12 beispielsweise einen halbkreisförmigen Querschnitt aufweisen.

Bei den Ausführungsformen nach den Fig. 3 bis 5 werden die beiden, im Anschlußstück 4 zunächst getrennt verlaufenden Umlenkkanäle 9 am Austrittsende 12 vereint, so daß im Gegensatz zur Ausführungsform nach Fig. 1 nicht zwei Austrittsenden, sondern nur noch ein Austrittsende 12 für beide Umlenkkanäle 9 vorgesehen ist. Bei den Ausführungsformen nach den Fig. 3 bis 5 werden die Querschnittsflächen der Umlenkkanäle 9 in Flächenanteile des gemeinsamen Ausströmquerschnittes am Austrittsende 12 transformiert. Außerdem wird auch die Querschnittsform der Umlenkkanäle 9 so transformiert, daß die Querschnitte der Umlenkkanäle 9 am Austrittsende 12 zur Querschnittsform dieses Austrittsendes einander ergänzen. Dadurch ergibt sich der Vorteil, daß der Übergang ohne sprunghafte Querschnittsänderung am Ort der Mischung (Austrittsende 12) erfolgt. Im Mischungsbereich bzw. am Austrittsende 12 sind die aus den Umlenkkanälen 9 austretenden Teilströme parallel zueinander ausgerichtet, so daß eine problemlose Mischung der Teilströme gewährleistet ist. Sind zwei Umlenkkanäle 9 vorgesehen, dann erfolgt die Transformierung hinsichtlich der Querschnittsfläche und der Querschnittsform jedes Umlenkkanales 9 derart, daß am Austrittsende 12 jeder Umlenkkanal die halbe Querschnittsfläche des Austrittsquerschnittes bildet.

Bei der beschriebenen stetigen Veränderung der Querschnitte der Umlenkkanäle 9 ist es vorteilhaft, die Größe der Querschnittsflächen der Umlenkkanäle 9 zumindest beizubehalten. Vorteilhafter ist es, sie stetig zu vergrößern. Eine Verringerung der Querschnittsfläche wäre mit einer Beschleunigung der Teilströmung und mit entsprechend steigenden Strömungsverlusten verbunden.

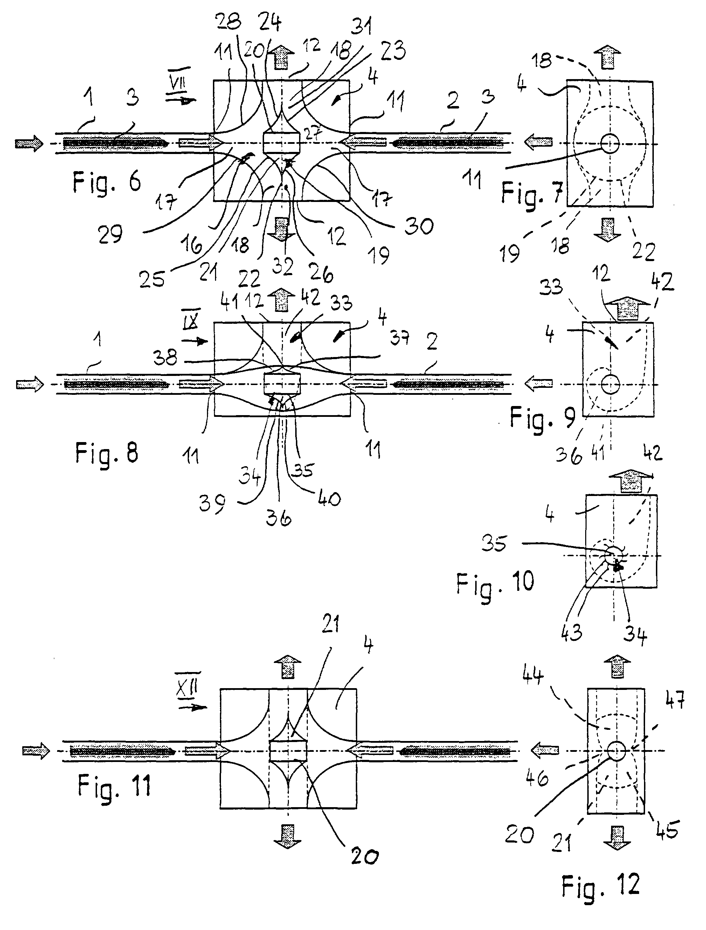

Während bei den beschriebenen Ausführungsbeispielen nach den Fig. 1 und 3 bis 5 die Strömungsumlenkung annähernd in einer gemeinsamen Ebene in den gekrümmten Umlenkkanälen 9 erfolgt, werden bei der Ausführungsform nach Fig. 6 die Teilströme senkrecht zu ihrer Zuströmrichtung bzw. annähernd senkrecht zum Strahlweg entgegengesetzt zueinander radial umgelenkt, wie durch die Strömungspfeile in Fig. 6 dargestellt ist. Durch eine solche Umlenkung kann die angestrebte Rotationssymmetrie von Strömung und Anregung des Lasermediums in optimaler Weise erreicht werden. Zudem kann die radiale Umlenkung mit einer starken Vergrößerung des Strömungsquerschnittes mit den damit verbundenen Verzögerungen der Strömung vorteilhaft verbunden werden.

Wie die Fig. 6 und 7 zeigen, hat das Anschlußstück 4 an seinen einander gegenüberliegenden Außenseiten die Eintrittsenden 11 für die Anregungsstrecken 1, 2. Die beiden Eintrittsenden 11 haben kreisförmigen Querschnitt. Die Achsen der Anregungsstrecken 1, 2 liegen - wie bei den bisher beschriebenen Ausführungsformen - fluchtend zueinander. An die Eintrittsenden 11 schließt ein annähernd kreuzförmiger Umlenkkanal 16 an, dessen zwei einander gegenüberliegende Arme 17 an die Eintrittsenden 11 anschließen. Die beiden anderen, um 90° versetzt hierzu liegenden Arme 18 erstrecken sich bis zu den beiden anderen Außenseiten des Anschlußstückes 4. Die Arme 18 haben an den einander gegenüberliegenden Außenseiten des Anschlußstückes 4 die Austrittsenden 12, die größere Querschnittsflächen haben als die Eintrittsenden 11. Jeder Teilstrom 3 in den Anregungsstrecken 1, 2 wird in zwei Teilströme aufgeteilt. Hierzu ist mittig im Umlenkkanal 16 ein Umlenkkörper 19 vorgesehen, der in Stirnansicht (Fig. 7) kreisförmigen Umriß hat. Der Umlenkkörper 19 hat zentral einen rohrförmigen Durchgang 20 für den Strahlweg. Außerhalb des rohrförmigen Durchganges 20 befinden sich rotationssymmetrisch und spiegelsymmetrisch zur Mittelebene zwischen den Anregungsbereichen 1, 2 gekrümmte Flächen 23, 24 zur radialen Umlenkung der Teilströme. Die gekrümmten Flächen 23, 24 können dazu der Kontur der gegenüberliegenden Seitenwandungen 23 bis 30 der Arme 18 in der Ebene von Einströmung 11 und Ausströmung 12 folgen. Radial wird der Umlenkkörper 19 durch eine Ringkante 22 abgeschlossen.

Die Ringkante 22 liegt etwa in halber Höhe des jeweiligen Armes 18 des Umlenkkanals 16. Dadurch werden die in Fig. 6 nach oben und unten umgelenkten Teilströme noch innerhalb jedes Armes 18 vor dem Ausströmen aus dem Austrittsende 12 miteinander vermischt.

Bei dieser Ausführungsform werden die über die Eintrittsenden 11 eintretenden Teilströme durch den Umlenkkörper 19 radial umgelenkt und verzögert und beim anschließenden Abströmen in zwei gegenüberliegende Abströmquerschnitte 12 der beiden Arme 18 in zwei Teilströme zusammengefaßt. Diese Zusammenführung der Teilströme des Lasermediums erfolgt auch bei diesem Ausführungsbeispiel im Bereich außerhalb des Strahlweges. Die radiale Strömung wird symmetrisch und über einen Winkelbereich um den Strahldurchtritt entsprechend dem Anteil des jeweiligen Abströmquerschnittes an der Summe aller Abströmquerschnitte in einem Ausströmquerschnitt zusammengeführt, der durch das jeweilige Austrittsende 12 gekennzeichnet wird. Dadurch wird die Bildung eines Dralles in den Anregungsbereichen des Laserstrahles sicher vermieden. Die Achse des Zylinderteils 20 liegt fluchtend zu den Achsen der Anregungsstrecken 1, 2. Die Querschnittsfläche jedes Austrittsendes 12 ist größer als die Querschnittsfläche des jeweiligen Eintrittsendes 11.

Die Bereiche zwischen der Ringkante 22 des Umlenkkörpers 19 und dem jeweiligen Austrittsende 12 bilden Sammelräume 31 und 32, in denen die jeweiligen Teilströme des Lasermediums 3 gemischt werden. Die Sammelräume sind symmetrisch in bezug auf die Quermittelebene des Anschlußstückes 4 ausgebildet. Dadurch wird ein großer Strömungsquerschnitt für das Lasermedium bereitgestellt, in den die radial umgelenkten Teilströmungen gelangen. Der Strömungsquerschnitt der Sammelräume 31, 32 kann darüber hinaus in Richtung auf das jeweilige Austrittsende 12 zunehmen. Im dargestellten Ausführungsbeispiel jedoch bleibt der Querschnitt der Sammelräume 31, 32 bis zum Austrittsende 12 annähernd konstant. Der Umlenkkanal 16 ist, wie Fig. 6 zeigt, spiegelsymmetrisch zur Quer- und Längsmittelebene des Anschlußstückes 4 ausgebildet. Durch diese symmetrische Ausführung in bezug auf die Austrittsenden 12 ergibt sich, daß die Umlenkungen aus der radialen Richtung in die Umfangsrichtung zu beiden Seiten der Symmetrieebenen gegengleich erfolgt und somit die Ausbildung eines Dralles durch die Ausström- und Sammelgeometrie verhindert wird.

Die Fig. 8 und 9 zeigen eine Ausführungsform, bei der die beiden in Richtung zueinander verlaufenden Teilströme radial in die gleiche Richtung innerhalb des Anschlußstückes 4 umgelenkt werden. Die Eintrittsenden 11 an den einander gegenüberliegenden Seitenwänden des Anschlußstückes 4 sind in bezug auf die Quermittelebene des Anschlußstückes 4 versetzt angeordnet. Die beiden Anregungsstrecken 1, 2, welche an die Eintrittsenden 11 angeschlossen sind, liegen fluchtend zueinander. Der Umlenkkanal 33 im Anschlußstück 4 ist etwa schneckenförmig ausgebildet (Fig. 9). Im Umlenkkanal 33 ist wiederum ein Umlenkkörper 34 vorgesehen, der einen Zylinderteil 35 hat, dessen Achse fluchtend zu den Achsen der Anregungsstrecken 1, 2 liegt. Der Zylinderteil 35 umschließt somit den Laserstrahl. Der Zylinderteil 35 ist von einem Flansch 36 umgeben, der gleiche axiale Länge wie der Zylinderteil 35 hat und dessen Breite radial nach außen abnimmt. Die Seitenwände 37 bis 40 sind wiederum konkav gekrümmt ausgebildet. Der Flansch 36 läuft in einer Kante 41 aus, die, bezogen auf die Achse des Zylinderteils 35, spiralförmig verläuft (Fig. 9). Das über die Eintrittsenden 11 in den Umlenkkanal 33 eintretende Lasermedium wird an den gekrümmten Seitenwänden 37 bis 40 des Flansches 36 radial in einen Kanalteil 42 umgelenkt, der vom Umlenkkörper 34 aus gerade bis zum Austrittsende 12 verläuft. Dieser Kanalteil 42 bildet wiederum einen Sammelraum, in dem die beiden Teilströme, die aus den Anregungsstrecken 1, 2 kommen, miteinander vermischt werden, bevor sie über das Austrittsende 12 aus dem Anschlußstück 4 austreten. Das Austrittsende 12 ist dazu unsymmetrisch zur Quermittelebene des Strahlweges angeordnet.

Bei dieser Ausführungsform erfolgt die Umlenkung des Lasermediums von der radialen Richtung in die Umfangsrichtung über den gesamten Umfang des Umlenkkörpers 34 gleichgerichtet. Eine solche Anordnung ist dann vorteilhaft, wenn in diesem Bereich der Strömungsführung minimale Verluste angestrebt werden und/oder wenn die Ausbildung von Drall im Anregungsbereich erwünscht ist oder wenn durch die Drallwirkung des Ausströmbereiches ein gegensinniger Drall im Bereich der Einströmung in den Anregungsbereich ausgeglichen werden soll.

Fig. 10 zeigt ein Ausführungsbeispiel eines Anschlußstückes 4, bei dem die Strömung analog zu Fig. 8 und 9 in einer Spirale geführt wird, bei der jedoch eine Drallbildung bei vergleichsweise niedrigen Strömungswiderständen durch eine Leiteinrichtung unterbunden wird. Die Leiteinrichtung wird durch Schaufeln 43 gebildet, die mit Abstand längs des Umfanges des Zylinderteils 35 des Umlenkkörpers 34 vorgesehen sind. Die Schaufeln 43 sind in Richtung der Umlenkströmung nach vorn gekrümmt ausgebildet. Die Leiteinrichtung 43 bringt die Kraft auf, um die radiale Strömung nach ihrer Umlenkung aus dem Strahlweg in die Umfangsrichtung der Abströmung umzulenken. Die aus den Anregungsstrecken 1, 2 kommenden Teilströme des Lasermediums 3 werden innerhalb des schneckenhausförmigen Sammelraumes durch den Umlenkkörper 34 zum Kanalteil 42 umgelenkt. Die Schaufeln 43 nehmen die für diese Umlenkung nötigen Kräfte auf, wodurch vorteilhaft verhindert wird, daß die Teilströmungen in den Anregungsbereichen des Lasermediums mit Drall beaufschlagt werden.

Das Anschlußstück 4 gemäß Fig. 10 ist im übrigen gleich ausgebildet wie das Ausführungsbeispiel nach den Fig. 8 und 9.

Die Fig. 11 und 12 zeigen eine Ausführungsform, die weitgehend dem Ausführungsbeispiel gemäß den Fig. 6 und 7 entspricht. Das Anschlußstück 4 ist wiederum symmetrisch zu seiner Quer- und Längsmittelebene ausgebildet. Das Anschlußstück 4 ist allerdings, wie ein Vergleich der Fig. 7 und 12 zeigt, schmaler ausgebildet als beim Ausführungsbeispiel nach den Fig. 6 und 7. Der den Zylinderteil 20 umgebende Flansch 21 ist nicht ringförmig ausgebildet, sondern weist an zwei einander gegenüberliegenden Seiten, bezogen auf die Achse des Zylinderteiles 20, Umlenkteile 44 und 45 auf, die über eine radiale Einschnürung 46, 47 ineinander übergehen. Eine derartige Innen- und Außenkontur entsteht, wenn die Geometrie von Fig. 4 an der Mittelebene des Strahlweges geschnitten und der obere Teil an der Mittelebene gespiegelt wird.

Die die aus den Anregungsstrecken 1, 2 austretenden Teilströmungen trennende Wand kann senkrecht zur Richtung des Laserstrahles liegen, was vorteilhaft zum Erreichen einer kurzen Bauform und zur Ausbildung einer einfachen Geometrie ist. Ebenso ist es möglich, die die Teilströmungen aus dem Weg des Laserstrahles führenden Flächen der trennenden Wand unter einem konstanten Winkel schräg zur Laserstrahlrichtung anzuordnen. Dadurch werden die Teilströmungen über den gesamten Querschnitt des Laserstrahlweges geführt.

Wie die Fig. 1 und 3 bis 12 zeigen, können die die Teilströmungen aus dem Laserstrahlweg führenden Flächen der trennenden Wand gekrümmt sein. So werden die aus den Anregungsstrecken 1, 2 austretenden Teilströme des Lasermediums 3 bei den Ausführungsformen nach den Fig. 1 und 3 bis 5 durch die bogenförmig gekrümmten Umlenkungskanäle 9 geführt, deren Wandungen entsprechend bogenförmig gekrümmt verlaufen. Auch bei den Ausführungsformen nach den Fig. 6 bis 12 sind gekrümmt verlaufende Führungsflächen für die aus den Anregungsstrecken 1, 2 austretenden Teilströme vorgesehen, welche durch die entsprechend gekrümmt verlaufenden Seitenwände 23 bis 26, 37 bis 40 der Umlenkkörper 19, 34 und die jeweils gegenüberliegenden Seitenwände 27 bis 30 des Umlenkkanales 16, 33 gebildet werden.

Bei einer gekrümmten, trennenden Wand ist die Strömungsgeometrie vorteilhaft so ausgeführt, daß die Verzögerungen der Teilströmungen in Einströmrichtung und die Beschleunigung der Teilströmungen in Richtung auf das Austrittsende 12 kontinuierlich über der gesamten geführten Umlenkung erfolgt, so daß in keinem Teil der Umlenkung Staupunkte mit vermeidbaren Strömungsverlusten entstehen. Im Regelfall werden die Teilströmungen nahezu gleiche Massenströme, Drücke, Temperaturen und Geschwindigkeiten aufweisen.

Daher ist es von Vorteil, die Strömungsführungen symmetrisch auszuführen, wie anhand der Ausführungsbeispiele nach den Fig. 6, 7, 11 und 12 beschrieben worden ist. Bei der Zusammenführung von mindestens zwei paarweise in Richtung zueinander strömenden Teilströmungen in einen gemeinsamen Abströmquerschnitt ist die Symmetrie senkrecht zum Laserstrahlweg von Vorteil. Solche Ausführungsbeispiele zeigen die Fig. 6 bis 12.

Bei der Führung der Teilströmungen in weitgehend getrennten Strömungssystemen ist es vorteilhaft, die Teilströmungen in unterschiedlichen Richtungen in bezug auf die Richtung des Laserstrahles umzulenken. Besonders vorteilhaft ist hierbei die Ausführung in Punktsymmetrie zu einem gemeinsamen Mittelpunkt, der vorzugsweise auf der Mittelachse des Laserstrahlweges liegen kann. Dadurch werden die strömungsführenden Geometrien der Teilströmungen und somit deren Strömungsverluste gleich und der Platzbedarf in Richtung des Laserstrahles gering gehalten.

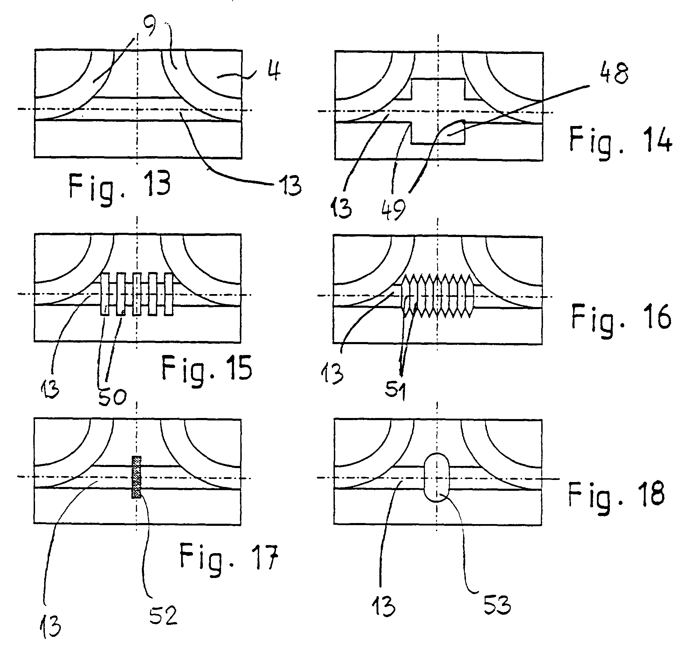

Die Fig. 13 bis 18 zeigen verschiedenen Ausführungen der Kanäle 13 für den Durchtritt des Laserstrahls.

Das Anschlußstück 4 gemäß Fig. 13 entspricht der Ausführungsform gemäß Fig. 1. Der Kanal 13 ist gerade ausgebildet und verbindet die beiden bogenförmig gekrümmt verlaufenden Umlenkkanäle 9. Die Wandung der Bohrung 13 ist glattflächig ausgebildet. Diese Form hat den Vorteil der einfachsten Herstellbarkeit. Durch Verlängerung des Durchtrittsbereiches für den Laserstrahl wird die trennende Wirkung verstärkt.

Bei der Ausführungsform nach Fig. 14 weist der Kanal 13 in halber Länge einen Hohlraum 48 auf. Der Übergang von der Innenwandung des Kanals 13 in die Innenwandung des Hohlraumes 48 erfolgt scharfkantig, da der Hohlraum 48 als im Querschnitt rechteckige Ringnut ausgebildet ist. Infolge dieses ringförmig umlaufenden Hohlraumes 48 erhält der geschlossene Laserstrahldurchtritt eine strukturierte Gestaltung, die zu einer erhöhten Dämpfung bei der Übertragung von Störungen zwischen den in Richtung zueinander gerichteten Teilströmungen führt. Dies wirkt sich vorteilhaft auf die Eigenschaften der Laserstrahlung aus. Infolge der Strukturierung des Laserstrahldurchtrittes kann die trennende Wirkung der Wand schon bei geringerer Ausdehnung in Richtung des Laserstrahles als bei glattflächiger Durchführung erreicht werden, wodurch auch die Baugröße des Anschlußstückes 4 verringert wird.

Am Übergang vom Hohlraum 48 in den Kanal 13 werden umlaufende Kanten 49 gebildet.

Der Übergang von der glatten Innenwandung des Kanales 13 in den Hohlraum 48 kann auch stetig durch eine entsprechend abgerundete Kante 49 erfolgen. Die Ringnut 48 ist symmetrisch in bezug auf den Kanal 13 ausgebildet.

Beim Ausführungsbeispiel nach Fig. 15 sind in der Wandung des Kanales 13 mit axialem Abstand voneinander angeordnete schmale Nuten 50 eingebracht, die wiederum als Störstellen beim Durchtritt des Lasermediums durch den Kanal 13 dienen. Der Übergang zwischen der Innenwandung des Kanales 13 zur Innenwandung der Nuten 50 erfolgt wiederum scharfkantig. Die Nuten 50 sind außerdem symmetrisch in bezug auf die Achse des Kanales 13 angeordnet.

Bei der Ausführungsform nach Fig. 16 ist der Kanal 13 mit V-förmigen Nuten 51 versehen, die unmittelbar aneinanderschließen. Auch hier ist wiederum ein scharfkantiger Übergang zwischen den Nuten und dem Kanal 13 vorgesehen. Die Nuten 51 sind, bezogen auf die Achse des Kanales 13, symmetrisch angeordnet.

Während bei den zuvor beschriebenen Ausführungsformen ein Teil der aus den Entladungsstrecken 1, 2 kommenden Teilströmungen des Lasermediums 3 auch in den Kanal 13 gelangen und aufeinandertreffen, ist beim Ausführungsbeispiel 17 eine vollständige strömungstechnische Trennung der in Richtung zueinander gerichteten Teilströmungen vorgesehen. Um diese vollständige Trennung zu erreichen, ist im Kanal 13 ein Trennelement 52 vorgesehen, das als Fenster oder als Folie ausgebildet sein kann. Das Trennelement 52 verhindert, daß die Teilströmungen des Lasermediums 3 innerhalb des Kanals 13 miteinander in Berührung kommen. Das Trennelement 52 ist aber für den Laserstrahl durchlässig, so daß die Laserstrahlung näherungsweise verlustfrei durch das Trennelement 52 transmittieren kann.

Bei sehr hohen Leistungen der Laserstrahlung, die durch den Kanal 13 verläuft, ist es von Vorteil, die Trennung der in Richtung zueinander verlaufenden Teilströme des Lasermediums 3 durch eine oder mehrere Sperrströmungen zu verstärken. Sie ist, wie Fig. 18 zeigt, im Bereich des umschlossenen Laserstrahldurchtrittes senkrecht zur Richtung des Laserstrahls angeordnet. Hierzu wird der Kanal 13 von einem Querkanal 53 durchsetzt, durch den das Lasermedium mit ausreichend hoher Geschwindigkeit strömt. Bei geeigneter Führung und Geschwindigkeit dieser Querströmung wird der Austausch von Störungen zwischen den in Richtung zueinander verlaufenden Teilströmungen des Lasermediums gemindert oder gar vollständig unterbunden, ohne daß hierzu ein transmittierender Festkörper in den Laserstrahl gebracht werden muß.

## Patentansprüche

1. Laseranordnung, vorzugsweise Hochleistungs-Gaslaseranordnung, mit wenigstens zwei axial durchströmten Anregungsbereichen (1, 2), in denen Teilströmungen des Lasermediums (3) in Richtung zueinander strömen und außerhalb des Weges des Laserstrahles zusammengeführt werden,
**dadurch gekennzeichnet, daß** die Teilströmungen des Lasermediums (3) zum größten Teil durch Wände aus dem Laserstrahlweg geführt werden derart daß ein frontaler Aufprall der Teilströmungen vermieden wird, und die Wände einen Strahldurchtritt (13) mit axialer Ausdehnung und feststehender, den Laserstrahl umschließender Innenkontur aufweisen.

2. Laseranordnung nach Anspruch 1,
**dadurch gekennzeichnet, daß** die Teilströmungen annähernd parallel zueinander umgelenkt werden.

3. Laseranordnung nach Anspruch 1 oder 2,
**dadurch gekennzeichnet, daß** die Mischung der Teilströmungen nach einer Umlenkung der Teilströmungen erfolgt.

4. Laseranordnung nach einem der Ansprüche 1 bis 3,
**dadurch gekennzeichnet, daß** die Mischung der Teilströmungen im Bereich der annähernd parallel zueinander verlaufenden Teilströmungen erfolgt.

5. Laseranordnung nach einem der Ansprüche 1 bis 4,
**dadurch gekennzeichnet, daß** die in Richtung zueinander strömenden Teilströmungen des Lasermediums (3) innerhalb eines Anschlußstückes (4) getrennt zugeführt werden.

6. Laseranordnung nach einem der Ansprüche 1 bis 5,
**dadurch gekennzeichnet, daß** die Teilströmungen an Stellen eines gemeinsamen Kreislaufes gemischt werden, an denen eine Rückwirkung der Strömung auf den Anregungsbereich (1, 2) nicht erfolgt.

7. Laseranordnung nach einem der Ansprüche 1 bis 6,
**dadurch gekennzeichnet, daß** die Teilströmungen des Lasermediums (3) durch eine rohrförmige Führung (6) annähernd in einer Ebene umgelenkt werden.

8. Laseranordnung nach einem der Ansprüche 1 bis 6,
**dadurch gekennzeichnet, daß** die Teilströmungen des Lasermediums (3) annähernd radial zum Laserstrahl umgelenkt werden.

9. Laseranordnung nach Anspruch 8,
**dadurch gekennzeichnet, daß** die Teilströmungen nach der annähernd radialen Umlenkung in wenigstens einen Ausströmquerschnitt (12) strömen.

10. Laseranordnung nach Anspruch 8 oder 9,
**dadurch gekennzeichnet, daß** nach der Umlenkung die radiale Strömung symmetrisch und über einen Winkelbereich um den Laserstrahldurchtritt entsprechend dem Anteil eines Abströmquerschnittes an der Summe aller Abströmquerschnitte in dem Ausströmquerschnitt (12) zusammengeführt wird.

11. Laseranordnung nach einem der Ansprüche 1 bis 9,
**dadurch gekennzeichnet, daß** die Teilströmungen des Lasermediums (3) in wenigstens einem schneckenförmigen Sammelraum (33) bis zum Ausströmquerschnitt (12) geführt werden.

12. Laseranordnung nach Anspruch 11,
**dadurch gekennzeichnet, daß** sich der Querschnitt des Sammelraumes (33) bis auf den Austrittsquerschnitt (12) erweitert.

13. Laseranordnung nach Anspruch 11 oder 12,
**dadurch gekennzeichnet, daß** am Übergang in die Radialabströmung im Sammelraum (33) wenigstens eine Umlenkleiteinrichtung (43) vorgesehen ist.

14. Laseranordnung nach einem der Ansprüche 1 bis 13,
**dadurch gekennzeichnet, daß** die in Laserstrahlrichtung projizierte Fläche, durch welche die Teilströmungen des Lasermediums aus dem Bereich des Laserstrahles geführt werden, größer ist als die Querschnittsfläche des Laserstrahlweges (13).

15. Laseranordnung nach Anspruch 14,
**dadurch gekennzeichnet, daß** die Querschnittsfläche der Teilströmungen des Lasermediums (3) vor dem Durchströmen des umlenkenden Bereiches vergrößert und die vergrößerte Querschnittsfläche im Bereich der umlenkenden Führung beibehalten oder vergrößert wird.

16. Laseranordnung nach Anspruch 14 oder 15,
**dadurch gekennzeichnet, daß** die Abmessungen der Strömungsquerschnitte senkrecht zur Ebene der Zu- und Abströmung des Lasermediums (3) größer sind als in dieser Ebene.

17. Laseranordnung nach einem der Ansprüche 1 bis 16,
**dadurch gekennzeichnet, daß** die Querschnittsflächen der Teilströmungen des Lasermediums (3) entlang der Führung und Umlenkung in die Querschnittsfläche einer Abströmung stetig in ihrer Querschnittsfläche und Querschnittsform transformiert werden.

18. Laseranordnung nach einem der Ansprüche 1 bis 17,
**dadurch gekennzeichnet, daß** die Querschnittsflächen der Teilströmungen des Lasermediums (3) entlang der Führung und Umlenkung stetig in ihrer Querschnittsfläche und Querschnittsform in die halbe Querschnittsfläche des Ausströmquerschnittes (12) transformiert werden.

19. Laseranordnung nach einem der Ansprüche 1 bis 18,
**dadurch gekennzeichnet, daß** die Querschnittsflächen der Teilströmungen des Lasermediums (3) entlang der Führung und Umlenkung bis zur Querschnittsfläche des Austrittes (13) beibehalten oder stetig vergrößert werden.

20. Laseranordnung nach einem der Ansprüche 1 bis 19,
**dadurch gekennzeichnet, daß** die die Teilströmungen des Lasermediums (3) trennenden Flächen der Wand senkrecht zur Laserstrahlrichtung stehen.

21. Laseranordnung nach einem der Ansprüche 1 bis 19,
**dadurch gekennzeichnet, daß** die die Teilströmungen des Lasermediums (3) aus dem Laserstrahlweg führenden Flächen der trennenden Wand unter einem konstanten Winkel zur Laserstrahlrichtung stehen.

22. Laseranordnung nach einem der Ansprüche 1 bis 19,
**dadurch gekennzeichnet, daß** die die Teilströmungen des Lasermediums (3) aus dem Laserstrahlweg führenden Flächen der trennenden Wand gekrümmt sind.

23. Laseranordnung nach einem der Ansprüche 1 bis 22,
**dadurch gekennzeichnet, daß** die trennenden und umlenkenden Flächen für die beiden in Richtung zueinander gerichteten Teilströmungen des Lasermediums spiegelsymmetrisch zur Senkrechten zum Laserstrahlweg angeordnet sind.

24. Laseranordnung nach einem der Ansprüche 1 bis 23,
**dadurch gekennzeichnet, daß** die umlenkende Krümmung der Fläche der Wand für die beiden in Richtung zueinander gerichteten Teilströmungen des Lasermediums (3) des Laserstrahls spiegelsymmetrisch zum Mittelpunkt des Laserstrahldurchtrittes durch die Wand angeordnet ist.

25. Laseranordnung nach einem der Ansprüche 1 bis 24,
**dadurch gekennzeichnet, daß** die innere Begrenzung des Laserstrahldurchtrittes durch die die Teilströmungen des Lasermediums (3) aus dem Laserstrahlweg führende Wand glattflächig ist.

26. Laseranordnung nach einem der Ansprüche 1 bis 24,
**dadurch gekennzeichnet, daß** die innere Begrenzung des Laserstrahldurchtrittes durch die die Teilströmungen des Lasermediums (3) aus dem Laserstrahlweg führende Wand durch regelmäßige oder unregelmäßige Ausnehmungen (48, 50, 51) stetig oder scharfkantig, symmetrisch oder asymmetrisch in bezug auf den freien Querschnitt des Laserstrahldurchtrittes strukturiert ist.

27. Laseranordnung nach einem der Ansprüche 1 bis 26,
**dadurch gekennzeichnet, daß** im Bereich des Laserstrahldurchtrittes durch die die Teilströmungen des Lasermediums (3) aus dem Laserstrahlweg führende Wand wenigstens ein optisches Element (52) vorgesehen ist, das eine Gasströmung durch den Laserstrahldurchtritt (13) unterbindet und die Laserstrahlung zumindest annähernd verlustfrei transmittieren läßt.

28. Laseranordnung nach einem der Ansprüche 1 bis 27,
**dadurch gekennzeichnet, daß** im Bereich des Laserstrahldurchtrittes (13) durch die die Teilströmungen des Lasermediums (3) aus dem Laserstrahlweg führende Wand wenigstens eine Sperrströmung (53) quer, vorzugsweise senkrecht, zum Laserstrahlweg geführt ist.

## Claims

1. A laser arrangement, preferably a high-energy gas-laser arrangement, with at least two regions of excitation (1, 2) the flow through which is axial, flow components of the laser medium (3) flowing in a direction towards one another in the said regions of excitation (1, 2) and being together guided outside the path of the laser beam, **characterised in that** the flow components of the laser medium (3) are for the most part guided by the walls out of the path of the laser beam in such a way that frontal impingement of the flow components is avoided, and the walls have a beam passage (13) with axial extension and stable internal contour enclosing the laser beam.

2. A laser arrangement according to Claim 1,
**characterised in that** the flow components are deflected approximately parallel to one another.

3. A laser arrangement according to Claim 1 or 2,
**characterised in that** mixing of the flow components occurs after deflection of the flow components.

4. A laser arrangement according to one of Claims 1 to 3,
**characterised in that** mixing of the flow components occurs in the region where the flow components follow a course approximately parallel to one another.

5. A laser arrangement according to one of Claims 1 to 4,
**characterised in that** the flow components of the laser medium (3) flowing in a direction towards one another are introduced separately into an attachment piece (4).

6. A laser arrangement according to one of Claims 1 to 5,
**characterised in that** the flow components are mixed at points on a common circuit at which there is no effect of the flow on the region of excitation (1, 2).

7. A laser arrangement according to one of Claims 1 to 6,
**characterised in that** the flow components of the laser medium (3) are deflected through a tubular guide member (6) approximately in a plane.

8. A laser arrangement according to one of Claims 1 to 6,
**characterised in that** the flow components of the laser medium (3) are deflected approximately radially relative to the laser beam.

9. A laser arrangement according to Claim 8,
**characterised in that**, after approximately radial deflection, the flow components flow in at least one outflow cross section (12).

10. A laser arrangement according to Claim 8 or 9,
**characterised in that**, after the deflection, the radial flow is brought together symmetrically and over an angular region about the laser-beam passage corresponding to the proportion of one outflow cross section in the sum of all outflow cross sections in the outflow cross section (12).

11. A laser arrangement according to one of Claims 1 to 9,
**characterised in that** the flow components of the laser medium (3) are guided in at least one spiral collector chamber (33) as far as the outflow cross section (12).

12. A laser arrangement according to Claim 11,
**characterised in that** the cross section of the collection chamber (33) is extended as far as the exit cross section (12).

13. A laser arrangement according to Claim 11 or 12,
**characterised in that** at least one deflecting/conducting device (43) is provided at the transition into the radial outflow in the collector chamber (33).

14. A laser arrangement according to one of Claims 1 to 13,
**characterised in that** the area projected in the direction of the laser beam, through which the flow components of the laser medium are guided out of the region of the laser beam, is larger than the cross-sectional area of the path of the laser beam (13).

15. A laser arrangement according to one of Claim 14,
**characterised in that**, before through-flow of the deflecting region, the cross-sectional area of the flow components of the laser medium (3) is enlarged, and the enlarged cross-sectional area is maintained or enlarged in the region of the deflecting guide member.

16. A laser arrangement according to Claim 14 or 15,
**characterised in that** the dimensions of the flow cross sections perpendicular to the plane of the inward flow and downward flow of the laser medium (3) are larger than in the plane.

17. A laser arrangement according to one of Claims 1 to 16,
**characterised in that** the cross-sections of the flow components of the laser medium (3) along the guide member and the deflection member into the outflow are continuously varied in their cross-sectional area and cross-sectional shape.

18. A laser arrangement according to one of Claims 1 to 17,
**characterised in that** the cross-sectional area and cross-sectional shape of the flow components of the laser medium (3) along the guide member and deflection member are continuously varied into half of the cross-section of the outflow (12).

19. A laser arrangement according to one of Claims 1 to 18,
**characterised in that** the cross-sectional areas of the flow components of the laser medium (3) along the guide member and deflection member are maintained or continuously enlarged up to the cross-sectional area of the exit (13).

20. A laser arrangement according to one of Claims 1 to 19,
**characterised in that** the wall surfaces separating the flow components of the laser medium (3) are perpendicular to the direction of the laser beam.

21. A laser arrangement according to one of Claims 1 to 19,
**characterised in that** the surfaces of the separating wall which guide the flow components of the laser medium (3) out of the path of the laser beam form a constant angle with the direction of the laser beam.

22. A laser arrangement according to one of Claims 1 to 19,
**characterised in that** the surfaces of the separating wall which guide the flow components of the laser medium (3) out of the path of the laser beam are curved.

23. A laser arrangement according to one of Claims I to 22,
**characterised in that** the separating and deflecting surfaces for the two flow components of the laser medium directed in a direction towards one another are arranged mirror-symmetrically to the perpendicular to the path of the laser beam.

24. A laser arrangement according to one of Claims 1 to 23,
**characterised in that** the deflecting curvature of the wall surface for the two flow components of the laser medium (3) directed in a direction towards one another are arranged mirror-symmetrically to the mid-point of the laser-beam passage through the wall.

25. A laser arrangement according to one of Claims 1 to 24,
**characterised in that** the inner boundary of passage of the laser beam through the wall guiding the flow components of the laser medium (3) out of the path of the laser beam has a smooth surface.

26. A laser arrangement according to one of Claims 1 to 24,
**characterised in that** the inner boundary of passage of the laser beam through the wall guiding the flow components of the laser medium (3) out of the path of the laser beam has a structure formed by regular or irregular recesses (48, 50, 51) constant or with sharp edges, symmetrical or asymmetrical with reference to the cross section of the laser-beam passage.

27. A laser-beam arrangement according to Claims 1 to 26,
**characterised in that**, in the region of passage of the laser beam through the wall guiding the flow components of the laser medium (3) out of the path of the laser beam, at least one optical member (52) is provided, which eliminates a flow of gas through the laser-beam passage (13) and allows at least approximately loss-free transmission of the laser beam.

28. A laser-beam arrangement according to Claims 1 to 27,
**characterised in that**, in the region of passage (13) of the laser beam through the wall guiding the flow components of the laser medium (3) out of the path of the laser beam, at least one inverse current (53) is guided obliquely, preferably perpendicularly, to the path of the laser beam.

## Revendications

1. Dispositif laser, de préférence dispositif laser à gaz de grande puissance, comportant au moins deux zones d'excitation (1,2) traversées axialement, dans lesquelles des écoulements partiels du milieu laser (3) circulent en direction l'un de l'autre et sont réunis à l'extérieur du trajet du faisceau laser,
**caractérisé en ce que** les écoulements partiels du milieu laser (3) sont guidés en majeure partie par des parois hors du trajet du faisceau laser de telle sorte qu'un choc frontal des écoulements partiels est évité et les parois possèdent une traversée (13) de passage pour le faisceau, qui s'étend axialement et un contour intérieur fixe, qui entoure le faisceau laser.

2. Dispositif laser selon la revendication 1, **caractérisé en ce que** les écoulements partiels sont déviés approximativement parallèlement entre eux.

3. Dispositif laser selon la revendication 1 ou 2, **caractérisé en ce que** le mélange des écoulements partiels s'effectue après une déviation des écoulements partiels.

4. Dispositif laser selon l'une des revendications 1 à 3, **caractérisé en ce que** le mélange des écoulements partiels s'effectue dans la zone, où les écoulements partiels sont au moins approximativement parallèles entre eux.

5. Dispositif laser selon l'une des revendications 1 à 4, **caractérisé en ce que** les écoulements partiels du milieu laser (3), qui circulent en direction l'un de l'autre, sont guidés en étant séparés à l'intérieur d'un élément de raccordement (4).

6. Dispositif laser selon l'une des revendications 1 à 5, **caractérisé en ce que** les écoulements partiels sont mélangés en des emplacements d'un circuit commun, au niveau desquels une réaction de l'écoulement sur la zone d'excitation (1,2) ne se produit pas.

7. Dispositif laser selon l'une des revendications 1 à 6, **caractérisé en ce que** les écoulements partiels du milieu laser (3) sont déviés approximativement dans un plan par un guide de forme tubulaire (6).

8. Dispositif laser selon l'une des revendications 1 à 6, **caractérisé en ce que** les écoulements partiels du milieu laser (3) sont déviés approximativement radialement par rapport au faisceau laser.

9. Dispositif laser selon la revendication 8, **caractérisé en ce que** les écoulements partiels circulent, après une déviation approximativement radiale, dans au moins une section transversale de sortie (12).

10. Dispositif laser selon la revendication 8 ou 9, **caractérisé en ce qu'**après la déviation les écoulements radial sont symétriques et sont réunis sur une plage angulaire autour du passage de traversée du faisceau laser, conformément au pourcentage d'une section transversale d'évacuation intervenant dans la somme de toutes les sections transversales d'évacuation dans la section transversale de sortie (12).

11. Dispositif laser selon l'une des revendications 1 à 9, **caractérisé en ce que** les écoulements partiels du milieu laser (3) sont guidés dans au moins une chambre de collecte (34) de forme hélicoïdale, jusqu'à la section transversale de sortie (12).

12. Dispositif laser selon la revendication 11, **caractérisé en ce que** la section transversale de la chambre de collecte (33) s'élargit jusqu'à atteindre la section transversale de sortie (12).

13. Dispositif laser selon la revendication 11 ou 12, **caractérisé en ce qu'**au moins un dispositif de guidage de déviation (43) est prévu au niveau de la jonction faisant passer à l'écoulement radial, dans la chambre de collecte (43).

14. Dispositif laser selon l'une des revendications 1 à 13, **caractérisé en ce que** la surface, qui est projetée dans la direction du faisceau laser et par laquelle les écoulements partiels du milieu laser sont guidés hors de la zone du faisceau laser, est supérieure à la surface en coupe transversale du trajet (13) du faisceau laser.

15. Dispositif laser selon la revendication 14, **caractérisé en ce que** la surface en coupe transversale des écoulements partiels du milieu laser (3) augmente avant le franchissement de la zone de déviation et la surface en coupe transversale agrandie est conservée ou agrandie dans la zone du guidage de déviation.

16. Dispositif laser selon la revendication 14 ou 15, **caractérisée en ce que** les dimensions des sections transversales d'écoulement perpendiculairement au plan d'arrivée et de départ du milieu laser (3) sont plus grandes que dans ce plan.

17. Dispositif laser selon l'une des revendications 1 à 16, **caractérisé en ce que** les surfaces en coupe transversale des écoulements partiels du milieu laser (3) se transforment continûment, du point de vue surface en coupe transversale et forme en coupe transversale, le long du guide et du système de déviation, en la surface en coupe transversale d'un écoulement sortant.

18. Dispositif laser selon l'une des revendications 1 à 17, **caractérisé en ce que** les surfaces en coupe transversale des écoulements partiels du milieu laser (3) se transforment continûment, du point de vue surface en coupe transversale et forme en coupe transversale, le long du guide et du système de déviation, en la moitié de la surface de la section transversale (12) de la sortie.

19. Dispositif laser selon l'une des revendications 1 à 18, **caractérisé en ce que** les surfaces en coupe transversale des écoulements partiels du milieu laser (3) sont maintenues ou augmentent de façon continue le long du guide et du système de déviation jusqu'à la surface en coupe transversale de la sortie (13).

20. Dispositif laser selon l'une des revendications 1 à 19, **caractérisé en ce que** les surfaces de la paroi, qui séparent les écoulements partiels du milieu laser (3), sont perpendiculaires à la direction du faisceau laser.

21. Dispositif laser selon l'une des revendications 1 à 19, **caractérisé en ce que** les surfaces de la paroi de séparation, qui guident les écoulements partiels du milieu laser (3) hors du trajet du faisceau laser, font un angle constant par rapport à la direction du faisceau laser.

22. Dispositif laser selon l'une des revendications 1 à 19, **caractérisé en ce que** les surfaces de la paroi de séparation, qui guident les écoulements partiels du milieu laser (3) hors du trajet du faisceau laser, sont cintrées.

23. Dispositif laser selon l'une des revendications 1 à 22, **caractérisé en ce que** les surfaces de séparation et de déviation pour les deux écoulements partiels du milieu laser, dirigés l'un vers l'autre, sont disposées avec une symétrie spéculaire par rapport à la perpendiculaire au trajet du faisceau laser.

24. Dispositif laser selon l'une des revendications 1 à 23, **caractérisé en ce que** la courbure de déviation de la surface de la paroi pour les deux écoulements partiels, dirigés l'un vers l'autre, du milieu laser (3) du faisceau laser est disposée selon une symétrie spéculaire par rapport au centre du passage de traversée du faisceau laser à travers la paroi.

25. Dispositif laser selon l'une des revendications 1 à 24, **caractérisé en ce que** la limite intérieure du passage de traversée du faisceau laser à travers la paroi, qui guide les écoulements partiels du milieu laser (3) hors du trajet du faisceau laser, est une surface lisse.

26. Dispositif laser selon l'une des revendications 1 à 24, **caractérisé en ce que** la limite intérieure de du passage de traversée du faisceau laser à travers la paroi qui guide les écoulements partiels du milieu laser (3) hors du trajet du faisceau laser, est structurée, à l'aide d'évidements réguliers ou irréguliers (48,50,51), de manière à être continue ou à arêtes vives, symétrique ou dissymétrique par rapport à la section transversale libre du passage de traversée du faisceau laser.

27. Dispositif laser selon l'une des revendications 1 à 26, **caractérisé en ce que** dans la zone du passage de traversée du faisceau laser dans la paroi qui guide les écoulements partiels du milieu laser (3) à partir du trajet du faisceau laser, il est prévu au moins un élément optique (52), qui empêche un écoulement de gaz dans le passage de traversée (13) du faisceau laser et permet la transmission du faisceau laser au moins approximativement sans perte.

28. Dispositif laser selon l'une des revendications 1 à 27, **caractérisé en ce que** dans la zone du passage de traversée (13) du faisceau laser dans la paroi guidant les écoulements partiels du faisceau laser (3) hors du trajet du faisceau laser, au moins un écoulement de blocage (53) est guidé transversalement, de préférence perpendiculairement, par rapport au trajet du faisceau laser.
